# EUROPÄISCHE PATENTANMELDUNG

(11) **EP 4 847 123 A1**
(43) Veröffentlichungstag der Anmeldung: **02.12.2026**
(21) Anmeldenummer: 25179302.2
(22) Anmeldetag: 28.05.2025
(51) Int. Cl.: B01J 4/00, B01J 19/24

(54) **REAKTOR ZUR UMSETZUNG VON EDUKT-FLUIDEN ZU PRODUKT-FLUIDEN**

(71) Anmelder: Siemens Aktiengesellschaft, 80333 München (DE)
(72) Erfinder: Kiener, Christoph, 81369 München (DE); Wiest, Sebastian, 13583 Berlin (DE)
(74) Vertreter: Siemens Patent Attorneys

(57) **Zusammenfassung**

Die Erfindung betrifft einen Reaktor zur Umsetzung von Edukt-Fluiden (4) zu Produkt-Fluiden (6) mit einem schalenförmigen Aufbau, wobei eine äußere Schale (8) eine Außenwand (10) darstellt, durch die eine Edukt-Zufuhröffnung (12) und eine Produkt-Auslassöffnung (14) geführt sind und an die im Inneren eine zweite Schale (16) in Form eines ersten Fluidkanals (18) angrenzt, worauf von außen nach innen gesehen eine dritte Schale (20) in Form einer Trennwand (22) vorgesehen ist, worauf eine vierte Schale (24) folgt, die wiederum in Form eines zweiten Fluidkanals (26) ausgestaltet ist und die im Weiteren von einer fünften Schale (28) in Form einer zweiten Trennwand (30) begrenzt ist, worauf als sechste Schale (32) ein Reaktionsraum (34) folgt, der von einem zentralen Rohr (36) durchzogen ist, das monolithisch mit den Schalen (8, 16, 20, 24) des Reaktors (2) verbunden ist und das zentrale Rohr (36) von mindestens einer Zufuhr-Rohrleitung (38) im Reaktionsraum (34) versehen ist, deren Länge die des zentralen Rohres (36) übertrifft und deren Querschnitt die eine Flächenmaßzahl (40) aufweist, die weniger als den die Hälfte der Flächenmaßzahl (42) der zentralen Rohrleitung (36) beträgt, wobei die Zufuhr-Rohrleitung (38) sowohl mit dem ersten Fluidkanal (18) und dem zweiten Fluidkanal (26), als auch mit dem zentralen Rohr (36) in Form einer Fluidleitung monolithisch verbunden ist und wobei eine abgedichtete elektrische Zuleitung (44) durch eine Öffnung (46) des Reaktors (2) vorgesehen ist, durch die eine elektrische Kontaktierung (48) führt, die mit dem zentralen Rohr (36) für eine Widerstandsbeheizung verbunden ist.

## Beschreibung

Die Erfindung betrifft einen Reaktor zur Umsetzung von Edukt-Fluiden zu Produkt-Fluiden nach Patentanspruch 1.

Jede stoffliche Nutzung von Kohlendioxid erfordert eine chemische Aktivierung des vollständig oxidierten Kohlenstoffs, dessen Oxidationszahl von +IV im Sinne einer Redox-Reaktion reduziert werden muss. Diese chemische Aktivierung von Kohlendioxid zu Kohlenmonoxid bedarf der Zuführung von Energie und Reduktionsäquivalenten. Es handelt sich also bei der Verwertung von Kohlendioxid zu Kohlenmonoxid und nachfolgend in einen Wertstoff wie beispielsweise Methan oder Methanol, der in der chemischen Industrie weiterverarbeitet werden kann, um eine endotherme Reaktion. In üblichen chemischen Prozessen wird die hierfür nötige Reaktionsenergie bei großtechnischen Reaktoren von außen, beispielsweise durch eine Gasflamme, hinzugefügt. Dies bedeutet jedoch stets, dass die höchste Temperatur im Reaktor an der Außenwand anliegt. Bei Reaktionen, die unter hohem Druck und unter hoher Temperatur stattfinden, wie dies üblicherweise bei der endothermen Reaktion von Kohlendioxid oder auch bei der Dampfreformierung von Methan der Fall ist, muss jedoch ein sehr hoher Aufwand betrieben werden, um bei hohen Temperaturen für die Außenwand des Reaktors auch eine entsprechende Druckstabilität zu gewährleisten. Dies ist insofern problematisch, da bei nahezu allen Werkstoffen die Festigkeit mit steigender Temperatur abnimmt. Zudem liegt die Höchsttemperatur im Reaktor dann an der Außenwand an und nicht im Reaktionsraum. Das heißt, dass zur Bereitstellung der nötigen Reaktionstemperatur an der Außenwand eine noch höhere Temperatur vorliegen muss, was wiederum einen zusätzlichen Aufwand an Wärmeenergie und eine noch höhere Belastung des Werkstoffs bedeutet. Dies ist im Falle einer Gasbeheizung mit einem höheren Kohlendioxidverbrauch verbunden, was im Übrigen auch einen wirtschaftlichen Nachteil bedeutet.

Die Aufgabe der Erfindung besteht darin, einen Reaktor bereitzustellen, der gegenüber dem Stand der Technik eine dünnere Reaktorwand für eine kompaktere Bauform durch intensivierten Wärmetausch aufweist und während der Reaktion einen geringeren Energieverbrauch und insbesondere einen geringeren CO₂-Fußabdruck aufweist.

Die Lösung der Aufgabe besteht in einem Reaktor zur Umsetzung von Edukt-Fluiden zu Produkt-Fluiden mit den Merkmalen des Patentanspruchs 1.

Der Reaktor nach Patentanspruch 1 dient zur Umsetzung von Edukt-Fluiden zu Produkt-Fluiden. Dabei sind Fluide sowohl Gase als auch Flüssigkeiten bzw. Mischungen aus Gasen und Flüssigkeiten. Der Reaktor weist einen schalenförmigen Aufbau auf, wobei eine äußere Schale eine Außenwand darstellt, durch die sowohl eine Edukt-Zufuhröffnung und eine Produkt-Auslassöffnung geführt sind. An die äußere Schale grenzt im Inneren eine zweite Schale in Form eines ersten Fluidkanals an. Hierauf erfolgt von außen nach innen gesehen eine dritte Schale in Form einer Trennwand, auf die wiederum eine vierte Schale folgt, die wiederum in Form eines zweites Fluidkanals ausgestaltet ist. Im Weiteren folgt eine fünfte Schale in Form einer zweiten Trennwand, die nach innen den zweiten Fluidkanal begrenzt, worauf als sechste Schale ein Reaktionsraum folgt, der von einem zentralen Rohr durchzogen ist. Das zentrale Rohr ist monolithisch mit den Schalen des Reaktors verbunden und das zentrale Rohr ist von mindestens einer Zufuhr-Rohrleitung im Reaktionsraum versehen, deren Länge die des zentralen Rohrs übertrifft und und deren Querschnitt (der metallischen Komponente) eine Flächenmaßzahl aufweist, die weniger als die Hälfte der Flächenmaßzahl 42 der zentralen Rohrleitung 36 beträgt. Dabei ist die Zufuhr-Rohrleitung sowohl mit dem ersten Fluidkanal und dem zweiten Fluidkanal als auch mit dem zentralen Rohr in Form einer kontinuierlichen Fluidleitung monolithisch verbunden. Zudem ist eine abgedichtete elektrische Zuleitung durch eine Öffnung des Reaktors vorgesehen, durch die eine elektrische Kontaktierung führt, die mit dem zentralen Rohr für eine Widerstandsbeheizung verbunden ist.

Die verwendeten Begriffe seien wie folgt definiert. Hierbei sind Fluide sowohl Gase als auch Flüssigkeiten bzw. Mischungen aus Gasen und Flüssigkeiten. Ein Reaktor dient hierbei nicht ausschließlich zur Umsetzung von chemischen Reaktionen, sondern auch zu den physikalischchemischen Umwandlungen und Veränderungen von Stoffen oder Stoffgemischen wie Trocknungsprozessen oder Prozessen zur Absorption, Adsorption oder Desorption von Stoffen aus Fluiden. Edukt-Fluide sind dabei Fluide, die in den Reaktor eingeführt werden, Produkt-Fluide verlassen hingegen den Reaktor. Ein Katalysatormaterial ist zu verstehen als eine Katalysator-Schüttung, auch bekannt als Schüttkatalysator, die aus kleinen, losen Partikeln besteht, wie z.B. Pellets, Granulat oder Kugeln, die von dem Fluid durchströmt werden, wobei das Fluid bei dieser Durchströmung in seiner chemischen Zusammensetzung verändert wird.

Durch die abgedichtete, elektrische Zuleitung wird somit eine elektrische Kontaktierung in das Innere des Reaktors an das zentrale Rohrs gelegt. Unter abgedichteter Zuleitung wird hierbei verstanden, dass die Zuleitung sowohl eine druckdichte Abdichtung bedeutet als auch eine elektrische Isolierung gegenüber der Außenwand des Reaktors darstellt. Es liegt also im Betrieb des Reaktors ein elektrischer Strom von einem inneren Bauteil, dem zentralen Rohr über die Zuführrohrleitung weiter über die äußeren Schalen zur Außenwand des Reaktors an. Wichtig dabei ist, dass die Zufuhrrohrleitung einerseits vom Querschnittsfläche (also der Flächenmaßzahl des metallischen Flächenanteils der Querschnittsfläche) deutlich geringer ist (höchstens 50 %) als die des zentralen Rohrs und gleichzeitig auch möglichst lang ausgestaltet ist, sodass sie nicht nur als Rohrleitung für die Zufuhr von Edukt-Fluiden einerseits dient, sondern gleichzeitig auch als Widerstandsbeheizung im Reaktionsraum des Reaktors ausgestaltet ist. Anders ausgedrückt ist der Querschnitt der Zufuhr-Rohrleitung deutlich geringer als der Querschnitt des zentralen Rohrs. Das bedeutet, während des Betriebs des Reaktors fließt ein Massenstrom des Edukt-Fluids durch die Zufuhr-Rohrleitung und wird in dieser vorgeheizt, da die Zufuhr-Rohrleitung hervorgerufen durch den auf den elektrischen Stromfluss wirkenden elektrischen Widerstand bereits auf die nötige Reaktionstemperatur erhitzt ist. Das Fluid wird somit vorgeheizt in den Reaktionsraum eingeführt. Die Zufuhr-Rohrleitung durchzieht wiederum direkt den Reaktionsraum. Die elektrische Beheizung findet somit im Zentrum des Reaktors im Reaktionsraum statt, was dazu führt, dass die Außenwand des Reaktors kälter ist als der Reaktorinnenraum. Dies wird zudem dadurch noch verstärkt, dass der Reaktor einen schalenförmigen Aufbau hat, der wiederum von mindestens zwei umlaufenden Fluidkanälen durchzogen ist. Dabei haben auch die Fluidkanäle im Wesentlichen eine Schalenform und erstrecken sich um die Außenwand des Reaktors herum. In dieser Form dienen sie ebenfalls der Isolierung zwischen der Reaktoraußenwand und dem heißen Reaktionsraum. Auf diese Weise ist die Außenwand durch die umlaufenden Fluidkanäle einer erheblich niedrigeren thermischen Belastung ausgesetzt, als dies der Fall wäre, wenn der Reaktor von außen befeuert oder elektrisch von außen beheizt werden würde.

Die beschriebenen Querschnitte der Zufuhr-Rohrleitung und ihre Wirkweise hier noch einmal zusammengefasst:
Elektrisch relevant: Flächenmaßzahl der metallischen Querschnittsfläche orthonormal zur Richtung des elektrischen Stromflusses - bestimmt den elektrischen Widerstand
Fluidisch relevant: Flächenmaßzahl der fluidischen Querschnittsfläche orthonormal zur Richtung des fluidischen Massenflusses - bestimmt den Druckverlust beim Durchströmen
Baulich-geometrisch: Außendurchmesser - sozusagen messbar mit Mess-Schieber; ergibt sich aus der Kombination von den beiden
In einer vorteilhaften Ausgestaltungsform der Erfindung ist die Strömungsführung der Fluide in der Art ausgestaltet, dass die Edukt-Zufuhröffnung in den ersten Fluidkanal führt (also in den Fluidkanal der direkt im Inneren an die Außenwand angrenzt) und von dort in die Zufuhr-Rohrleitung für das zentrale Rohr führt und von dem zentralen Rohr in den Reaktionsraum mündet. Im Weiteren erfolgt dann eine Fluidführung vom Reaktionsraum zu dem zweiten Fluidkanal zur Produkt-Auslassöffnung. Der zweite Fluidkanal ist von der Außenwand hergesehen ebenfalls schalenförmig ausgelegt und ist, nur durch die erste Trennwand vom ersten Fluidkanal getrennt, innerhalb des Reaktors angeordnet. Diese Strömungsführung führt dazu, dass das heiße Produkt im zweiten Fluidkanal über die erste Trennwand die Wärme an den ersten Fluidkanal abgibt, wodurch ein hier durchströmendes Fluid, das aus der Edukt-Zufuhröffnung kalt eintritt, vorgewärmt wird. Das heißt also, das heiße Produkt-Fluid gibt seine Wärme über die erste Trennwand an das einströmende Edukt-Fluid im Betrieb des Reaktors ab. Dieser Wärmetauschprozess ist nicht nur zur Einsparung von Prozessenergie geeignet, er dient auch gleichzeitig zur weiteren Isolierung der Reaktoraußenwand gegenüber dem Reaktionsraum, was deren Temperatur noch weiter verringert, sodass sie gegenüber den Reaktoraußenwänden aus dem Stand der Technik wesentlich dünner bei gleicher Druckstabilität ausgestaltet werden kann.

Der beschriebene komplexe Aufbau des Reaktors, der die beschriebenen technischen Vorteile mit sich bringt, ist insbesondere durch ein additives Herstellungsverfahren möglich. Daher ist der Reaktor in einer bevorzugten Ausgestaltungsform durch ein additives Herstellungsverfahren, insbesondere ein Laserschmelzverfahren in einem Pulverbett hergestellt. Dies ermöglicht insbesondere die monolithische Darstellung und die komplexe Strukturierung des beschriebenen Reaktoraufbaus.

In einer weiteren vorteilhaften Ausgestaltungsform der Erfindung ist die Zufuhr-Rohrleitung spiralförmig um die zentrale Rohrleitung angeordnet. Dies bewirkt, dass die Zufuhr-Rohrleitung möglichst lang gegenüber der zentralen Rohrleitung ausgestaltet sein kann, wobei gleichzeitig eine möglichst gute Ausnutzung des zur Verfügung stehenden Reaktionsraums gegeben ist. Dabei können auch mehrere Zufuhr-Rohrleitungen spiralförmig um die zentrale Rohrleitung angeordnet sein, was zu einer noch längeren Zufuhr-Rohrleitung führt, die durch ihre Widerstandsbeheizung und die Erwärmung im Reaktionsraum einen höheren Energieeintrag in den Reaktionsraum ermöglicht.

Ferner zeichnet sich der Reaktor in einer vorteilhaften Ausgestaltungsform dadurch aus, dass eine zweite hermetisch verschließbare Öffnung vorgesehen ist, die der elektrischen Zuleitungsöffnung entlang einer Reaktorhauptachse gegenüberliegt. Diese zweite Öffnung dient einerseits dazu, ein Katalysatormaterial in den Reaktionsraum einzubringen. Für den Betrieb des Reaktors muss diese hermetisch, d. h. gasdicht und flüssigkeitsdicht bei erhöhten Drücken verschließbar ausgestaltet sein. Die Öffnung liegt deshalb der elektrischen Zuleitung direkt gegenüber (bezogen auf die Reaktorhauptachse) da sie durch diese Anordnung beim Herstellen des Reaktors, insbesondere durch ein additives Herstellungsverfahren für das Einbringen einer Stützvorrichtung geeignet ist. Daher ist es auch zweckmäßig, dass die zweite Öffnung in direkter Verbindung mit dem Reaktionsraum steht, insbesondere um ein Katalysatormaterial, das für die Produktion verschiedener Produktstoffe nötig ist, in den Reaktionsraum einzubringen und wieder herauszuholen.

In einer weiteren vorteilhaften Ausgestaltungsform sind zwei weitere Schalen im Reaktor vorgesehen, die in Form eines dritten Fluidkanals und einer weiteren Trennwand zwischen dem Reaktionsraum und der fünften Schale in Form der zweiten Trennwand angeordnet sind. Der dritte Fluidkanal stellt zwar eine weitere Erhöhung der Komplexität der Reaktorgeometrie dar, bietet aber eine weitere Möglichkeit für einen Wärmetauschprozess zwischen den Edukt-Fluiden und den Produkt-Fluiden. Dies erhöht die Energieeffizienz des gesamten Reaktors in Betrieb in einem weiteren Maße.

In einer weiteren vorteilhaften Ausgestaltungsform der Erfindung ist ein Fluiddurchlass zwischen dem Reaktionsraum und den jeweiligen Fluidkanälen durch eine poröse Wand gebildet. Dies ist insbesondere dann technisch zweckmäßig und unaufwändig darstellbar, wenn der Reaktor durch ein additives Fertigungsverfahren hergestellt wird. In diesem Fall kann an Fluiddurchlassöffnungen an eine poröse Struktur erzeugt werden, was den Vorteil hat, dass diese die Fluidkanäle gegenüber dem Reaktionsraum und dem dort im Einsatz befindlichen Katalysatormaterial (in der Regel eine Katalysatorschüttung) bildet.

Wie bereits dargelegt, ist die Flächenmaßzahl des metallischen Anteils des Durchmessers der Zufuhr-Rohrleitung wesentlich kleiner als die des zentralen Rohres, nämlich höchstens die Hälfte dessen des zentralen Rohres. In einer besonders bevorzugten Ausgestaltungsform ist der die Flächjenmaßzahl zwischen 50 % und 20 % der Flächenmaßzahl des metallischen Anteils des zentralen Rohres. Dies führt zu einem erhöhten elektrischen Widerstand und somit zu einer höheren Heizleistung bei gleicher Länge.

In einer weiteren Ausgestaltungsform der Erfindung ist der Innendurchmesser der Zufuhr-Rohrleitung entlang seiner Durchflussrichtung so ausgestaltet, dass er sich erweitert. Dies hat Vorteile bei der Reaktionsführung und fördert die Strömungsmechanik der Fluide.

Bei einer weiteren Ausgestaltungsform der Erfindung ist eine zweite elektrische Kontaktierung zur Widerstandsbeheizung mit der äußeren Schale der Reaktionswand verbunden.

Ferner ist es zweckmäßig, dass die elektrische Kontaktierung, die mit dem zentralen Rohr für die Widerstandsheizung verbunden ist, in Form einer Verschraubung mit diesen verbunden ist. In diesem Zusammenhang ist es ebenfalls vorteilhaft, dass der Reaktor Kühlkanäle aufweist, die die Öffnung für die elektrische Zuleitung innerhalb der Reaktoraußenwand, die auch die Öffnung für die elektrische Zuleitung bildet und umschließt, angeordnet sind. Somit kann die elektrische Zuführung als gesondertes Bauteil ausgestaltet sein, dass gegenüber der erhöhte Temperatur aufweisenden Reaktoraußenwand nicht nur elektrisch, sondern auch thermisch isoliert ist.

Weitere Ausgestaltungsformen und weitere Merkmale der Erfindung werden in den folgenden Figuren näher erläutert. Dabei haben Merkmale mit derselben Bezeichnung in unterschiedlichen Ausgestaltungsformen dieselben Bezugszeichen. Die Zeichnungen sind rein schematisch und dienen der Erläuterung und stellen somit keine Einschränkung des Schutzbereiches dar.

Dabei zeigen:
- Figur 1: eine schematische Darstellung eines partiellen Längsschnittes durch einen Reaktor mit Veranschaulichung der Fluidströmung,
- Figur 2: einen Querschnitt durch den Reaktor nach Figur 1 entlang der Linie II,
- Figur 3: einen Reaktor gemäß Figur 1 in einer detaillierten Darstellung, die aus einer CAD-Konstruktionszeichnung abgeleitet ist,
- Figur 4: einen Ausschnitt aus einer spiralförmigen Zufuhrvorrichtung und
- Figur 5: eine vergrößerte Darstellung des Details V in Figur 3.

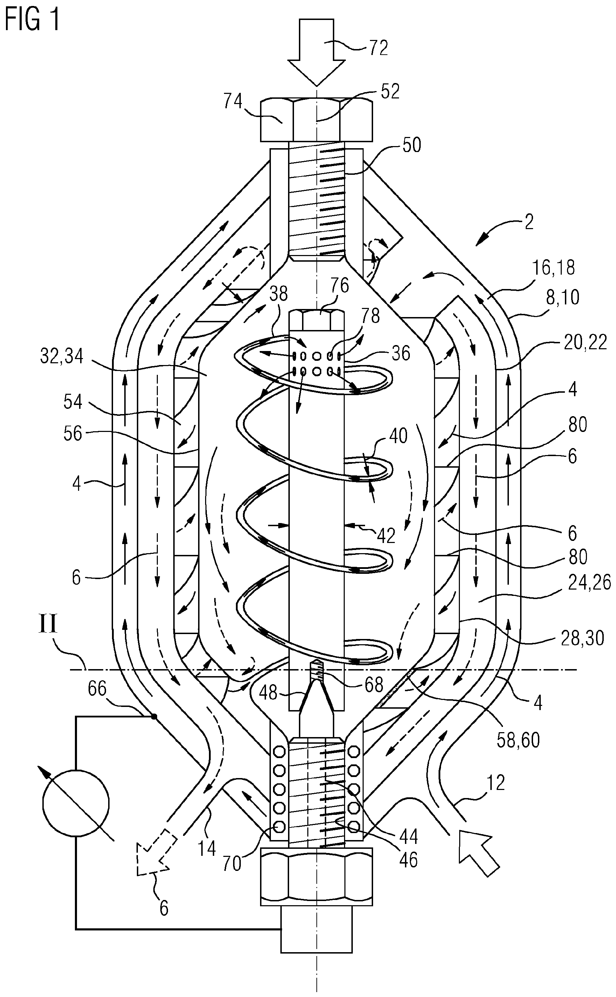

In Figur 1 ist eine sehr schematische Darstellung eines Querschnittes durch einen Reaktor 2 gegeben, der dazu geeignet ist, Edukt-Fluide 4, also die Ausgangsstoffe für ein im Reaktor zu reagierendes Produkt, das als Produkt-Fluide 6 bezeichnet wird, zu führen. In Figur 1 ist insbesondere die Strömungsführung der Edukt-Fluide 4 und der Produkt-Fluide 6 im Reaktor 2 während dessen Betrieb veranschaulicht. Dabei sind zur besseren Veranschaulichung die Edukt-Fluide 4 mit durchgezogenen Pfeilen dargestellt, die Produkt-Fluide 6 sind in gestrichelten Pfeilen dargestellt.

Der Reaktor 2 ist schalenförmig aufgebaut. Hierbei wird unter dem Begriff Schale jeweils eine Wand bzw. ein an die Wand angrenzender Kanal verstanden. Zunächst weist der Reaktor 2 eine äußere Schale 8 auf, die im Weiteren als Außenwand 10 bezeichnet wird. Diese begrenzt von außen nach innen gesehen eine zweite Schale 16, die in Form eines ersten Fluidkanals 18 ausgestaltet ist. Ferner ist durch die Außenwand 10 eine Edukt-Zufuhröffnung 12 und eine Produkt-Auslassöffnung 14 gelegt. Der erste Fluidkanal 18, der auch als zweite Schale bezeichnet wird, wird von einer dritten Schale 20 in Form einer Trennwand 22 nach innen begrenzt. Es folgte eine vierte Schale 24, die in Form eines zweiten Fluidkanals 26 ausgestaltet ist und die wiederum von außen nach innen durch eine fünfte Schale 28 in Form einer zweiten Trennwand 30 begrenzt ist. Als sechste Schale 32 wird der Reaktionsinnenraum 34 bezeichnet. In der Ausgestaltung gemäß Figur 1 ist zwischen der fünften Schale 28, also der zweiten Trennwand 30 und dem Reaktionsraum 34 ein dritter Fluidkanal 54 und eine weitere Trennwand 56 angeordnet. Diese zusätzlichen zwei Schalen, die weitere Trennwand 56 und der dritte Fluidkanal 54, stellen eine vorteilhafte Ausgestaltungsform des Reaktors 2 dar, auf die in ihrer Wirkung noch eingegangen wird.

Die äußeren beiden Fluidkanäle, der erste Fluidkanal 18 und der zweite Fluidkanal 26 sind gemäß der Figur 1 so angelegt, dass das darin durchströmbare Fluid 4 oder 6 in den beiden genannten Fluidkanälen 18, 26 gegenläufig zueinander geführt ist. Auf die Strömungsführung wird noch im Weiteren eingegangen werden.

Aus dem zweiten und/oder aus dem dritten Fluidkanal 26, 54 geht eine Zufuhr-Rohrleitung 38 hervor, die sich in diesem Beispiel spiralförmig um ein zentrales Rohr 36 schlängelt, wobei sich in dem zentralen Rohr 36 Austrittsöffnungen 78 befinden, wodurch die Edukt-Fluide 4 in den Reaktionsraum 34 strömen können.

Ferner weist der Reaktor 2 neben der Edukt-Zufuhröffnung 12 und der Produkt-Auslassöffnung 14 noch zwei weitere Öffnungen auf, nämlich eine Öffnung 46, für eine elektrische Zuleitung 44, wobei die elektrische Zuleitung 44 so ausgestaltet ist, dass sie zu einer elektrischen Kontaktierung 48 am zentralen Rohr 36 führt. Diese elektrische Kontaktierung 48 ist bevorzugt durch eine Verschraubung 68 ausgestaltet. Die Öffnung 46 ist mit Kühlkanälen 70 versehen, die in der Außenwand 10 des Reaktors 2 zur Kühlung verlaufen. Somit kann die Öffnung 46 mit der elektrischen Zuleitung 44 sowohl druckdicht als auch elektrisch isolierend verschlossen werden.

Ferner ist eine zweite Öffnung 50 vorgesehen, die in diesem Beispiel entlang einer Reaktorhauptachse 52 der Öffnung 46 gegenüberliegt. Diese Öffnung 50 ist ebenfalls mit einer hermetischen Abdichtung 74 versehen, sodass der Reaktor 2 im betriebsfertigen Zustand druckdicht abgedichtet ist.

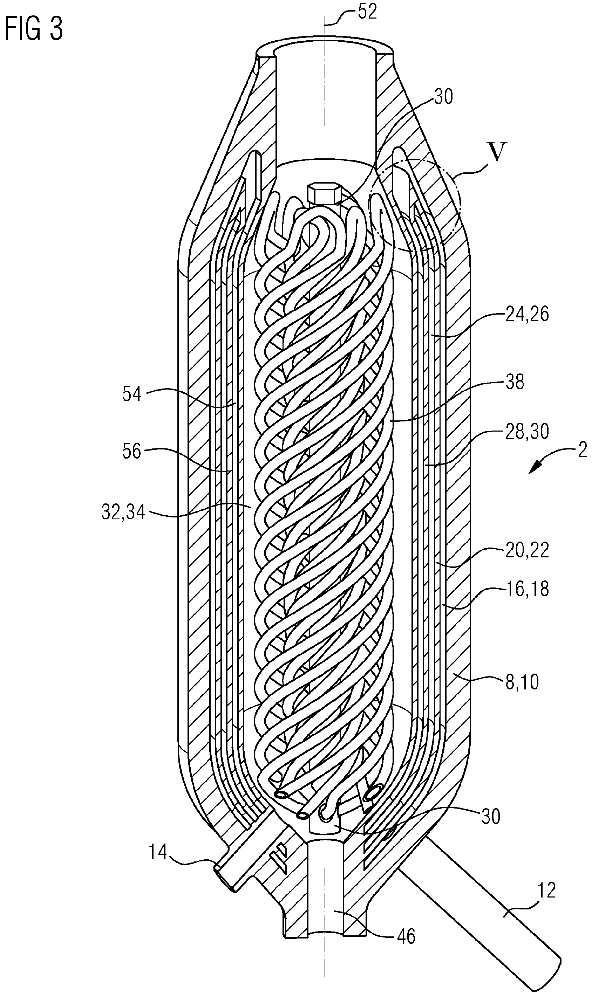

Der Reaktor 2 ist bevorzugt mittels eines additiven Fertigungsverfahrens insbesondere und beispielsweise durch ein Laserschmelzverfahren gefertigt. Dies bietet die Möglichkeit, den komplexen Aufbau des Reaktors 2 in seiner monolithischen Form technologisch darzustellen. Hierfür ist es auch zweckmäßig, dass die Öffnung 46 und die zweite Öffnung 50 sich entlang der Reaktorhauptachse 52 gegenüberliegen. Es können dabei (hier nicht dargestellte) Stützelemente bei der Herstellung des Reaktors 2 während der Herstellung mit aufgebaut werden, die insbesondere die filigrane Struktur der spiralförmigen Zufuhr-Rohrleitung 38 und das praktisch freihängende zentrale Rohr 36, das nach der hier gegebenen Darstellung lediglich über die Rohrleitung 38 an dem Reaktorkörper angebunden ist, abzustützen. Ferner ist die zweite Öffnung 50 während der Montage der elektrischen Zuleitung 44 insofern hilfreich, da durch die zweite Öffnung 50 eine hier nicht dargestellte Stützstruktur für das zentrale Rohr in die hier gezeigte Hilfs-Verschraubung 76 eingreift. Der durch das additive Herstellungsverfahren dargestellte Reaktor 2, wie er auch in einer detaillierteren Form noch in Figur 3 dargestellt ist, ist somit ein monolithisches Bauteil, wenn man von den beiden Abdichtungen, der Abdichtung 74 der zweiten Öffnung und der elektrischen Zuleitung 44 absieht.

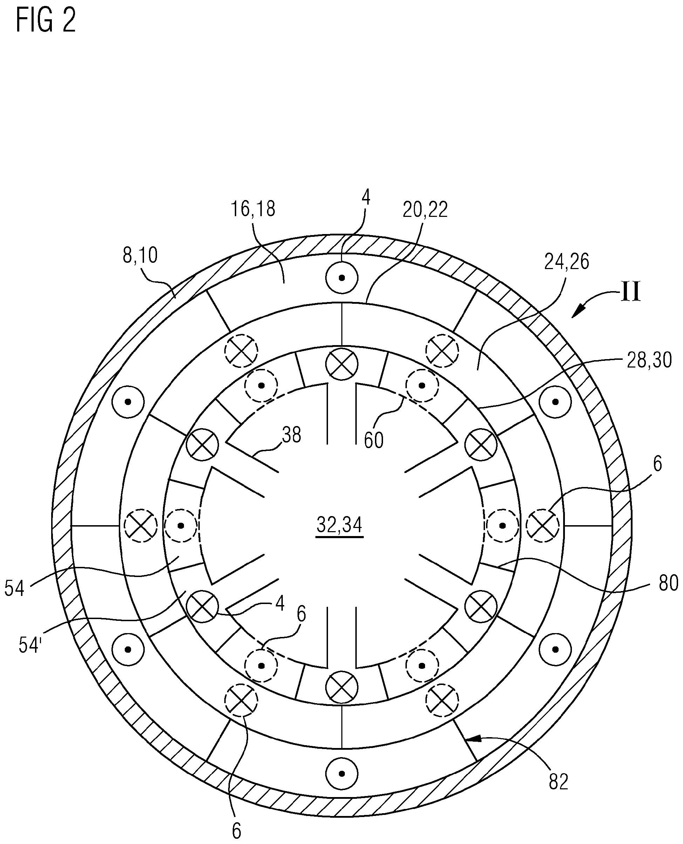

In Figur 2 ist eine schematische Querschnittsdarstellung durch den Reaktor 2 in Figur 1 in etwa entlang der gestrichelten Linie II gegeben. Anhand einer Gegenüberstellung dieser beiden Darstellungen wird im Folgenden eine beispielhafte Strömungsführung für Fluide im Einsatz des Reaktors 2 veranschaulicht. Hierbei werden durch die Edukt-Zufuhröffnung 12 Edukt-Fluide 4 in den ersten Fluidkanal 18 geleitet. Der Fluidkanal 18 ist dabei so ausgestaltet, dass er als umlaufende Schale (zweite Schale 16) ausgestaltet ist, die gegebenenfalls durch Stützlamellen 82 (Fig. 2), die zwischen der Außenwand 10 und der Trennwand 22 vorgesehen sind, abgestützt ist. Die Edukt-Fluide 4 verlaufen nun durch den ersten Strömungsfluidkanal 18 in den dritten Fluidkanal 54. Der dritte Fluidkanal 54 ist im Gegensatz zu dem ersten Fluidkanal 18 und dem zweiten Fluidkanal 26, auf den noch später eingegangen wird, in der Art ausgestaltet, dass hier durch Lamellen 80 getrennte Sub-Fluidkanäle 54' gebildet sind. Die einzelnen Sub-Fluidkanäle 54' sind wiederum so ausgestaltet, dass Edukt-Fluide und Produkt-Fluide gegenläufig zueinander in diesem dritten Fluidkanal verlaufen. Dies ist durch die unterschiedliche Frontal-Pfeildarstellung (Punkt oder Kreuz) in Figur 2 veranschaulicht. Die Edukt-Fluide 4 werden durch den dritten Fluidkanal 54 in die Zufuhr-Rohrleitung 38 (von denen in einer bevorzugten Ausgestaltung gemäß Figur 3 auch mehrere vorgesehen sind) geleitet. Dabei ist anzumerken, dass auf einen dritten Fluidkanal 54 grundsätzlich auch verzichtet werden kann, er dient zum zusätzlichen Wärmeaustausch zwischen Edukten und Produkten. Somit kann aus dem ersten Fluidkanal 18 auch bereits eine Einleitung der Edukt-Fluide 4 in die Zufuhr-Rohrleitung 38 erfolgen. Die Edukt-Fluide 4 durchströmen die Zufuhr-Rohrleitungen 38 und werden in das zentrale Rohr 36 geleitet und strömen dort aus Austrittsöffnungen 78 in den Reaktionsraum 34. In dem Reaktionsraum 34 befindet sich eine Katalysatorschüttung, die hier der Übersichtlichkeit halber nicht explizit dargestellt ist, und die Edukt-Fluide 4 werden durch diese Katalysatorschüttung in den Reaktionsraum 34 geleitet und reagieren hierbei zu den Produkt-Fluiden 6. Dabei herrscht die Reaktionstemperatur, die üblicherweise zwischen 150 °C und 1200 °C, bevorzugt zwischen 400 °C und 950 °C liegt, im Reaktionsraum 34 vor (auf die Beheizung wird im nächsten Absatz eingegangen). Somit haben die Produkt-Fluide beim Verlassen des Reaktionsraums 34 in den dritten Fluidkanal 54 bzw. 54' oder auch je nach Ausgestaltung des Reaktors 2 in den zweiten Fluidkanal 26 noch nahezu die Reaktionstemperatur. Sowohl der dritte Fluidkanal 54, 54' als auch der zweite Fluidkanal 26 sind so gestaltet, dass die Fluidführung der Produkt-Fluide 6 mit einer hohen Temperatur direkt an einen Fluidkanal (erster Fluidkanal 18 oder Teile des dritten Fluidkanals 54) angrenzen, sodass eine Wärmeabgabe über die erste Trennwand 22 oder die Lamellen 80 in den Nachbarkanal möglich ist, sodass die Wärmeenergie der Produkt-Fluide zur Aufheizung der ohne Vorheizung eingeströmten Edukt-Fluide 4 übertragen wird. Zuletzt folgt eine Ausleitung der Produkt-Fluide 6 durch die Produkt-Auslassöffnung 14.

Im Weiteren wird über die Heizung des Reaktors 2 für die Reaktion eingegangen, wobei der elektrische Stromfluss in den metallischen Bereichen fließt, deren elektrischer Widerstand von den metallischen Querschnittsflächen abhängt. Durch die elektrische Kontaktierung 48 an dem zentralen Rohr 36, was bevorzugt durch eine stabile Verschraubung der elektrischen Kontaktierung 48 erfolgt, wird elektrischer Strom in das zentrale Rohr 36 eingeleitet. Dieser elektrische Strom fließt über das zentrale Rohr 36 in die Zufuhr-Rohrleitungen 38. Da die Zufuhr-Rohrleitungen, wie auch in Figur 1 und in Figur 3 dargestellt, deutlich dünner ausgestaltet sind, als das zentrale Rohr 36 haben sie einen höheren elektrischen Widerstand und heizen sich dabei auf. Zur Erzielung des entsprechenden elektrischen Widerstandes sollten die Zufuhr-Rohrleitungen 38 höchstens halb so dick sein wie das zentrale Rohr 36, insbesondere sollten sie 80 % dünner sein als das zentrale Rohr 36. Da die Edukt-Fluide 4 bereits angewärmt durch den Wärmetauschprozess zwischen dem ersten Fluidkanal 18 und dem zweiten Fluidkanal 26 durch die beheizten Zufuhr-Rohrleitungen 38 geleitet werden, erhitzen sich diese Edukt-Fluide 4 auf die Reaktionstemperatur, beispielsweise 800 °C, und gelangen so mit der gewünschten Reaktionstemperatur durch die Austrittsöffnungen 78 im zentralen Rohr 36 in den Reaktionsraum 34 und werden dort im Kontakt mit dem nicht dargestellten Katalysator zu den Produkt-Fluiden 6 chemisch umgesetzt, die dann wie bereits beschrieben durch den dritten Fluidkanal 54, 54' bzw. dem zweiten Fluidkanal 26 unter wärmetauschender Wirkung durch die Produkt-Auslassöffnung 14 ausgeleitet werden. Es ist dabei zu erwähnen, dass eine zweite elektrische Kontaktierung 66 vorgesehen ist, die an der Außenwand 10 des Reaktors 2 angelegt ist.

In Figur 3 ist noch einmal eine etwas detailliertere Darstellung des Reaktors 2 mit denselben bereits beschriebenen Elementen gegeben. Hier ist insbesondere zu erkennen, dass die erste Schale 8 in Form der Außenwand 10 deutlich dicker ausgestaltet ist als die erste Trennwand 22 bzw. die zweite Trennwand 30. Die Außenwand 10 muss druckdicht ausgestaltet sein, da in dem Reaktor 2 neben der Temperatur von 150 °C bis 1200 °C, bevorzugt von 400 °C bis 950 °C für die Reaktion auch ein erhöhter Druck bis zu 50 bar vorherrscht. Die Außenwand 10 kann jedoch viel dünner ausgestaltet sein als bei vergleichbaren Reaktoren, die von außen beheizt werden und die nicht in den Figuren 1 bis 3 dargestellte wärmetauschenden Fluidkanäle aufweisen. Dadurch dass die Produkt-Fluide 6 ihre Wärme an die Edukt-Fluide 4 beim Durchfließen der Fluidkanäle 18 und 26 austauschen, ist die Temperatur an der Außenwand 10 des Reaktors 2 deutlich geringer als die Reaktionstemperatur im Reaktionsraum 34. Daher kann die Außenwand 10 auch deutlich dünnwandiger ausgestaltet werden, als dies bei einer Außenbeheizung des Reaktors 2 aufgrund der Druckfestigkeitsanforderungen benötigt wäre.

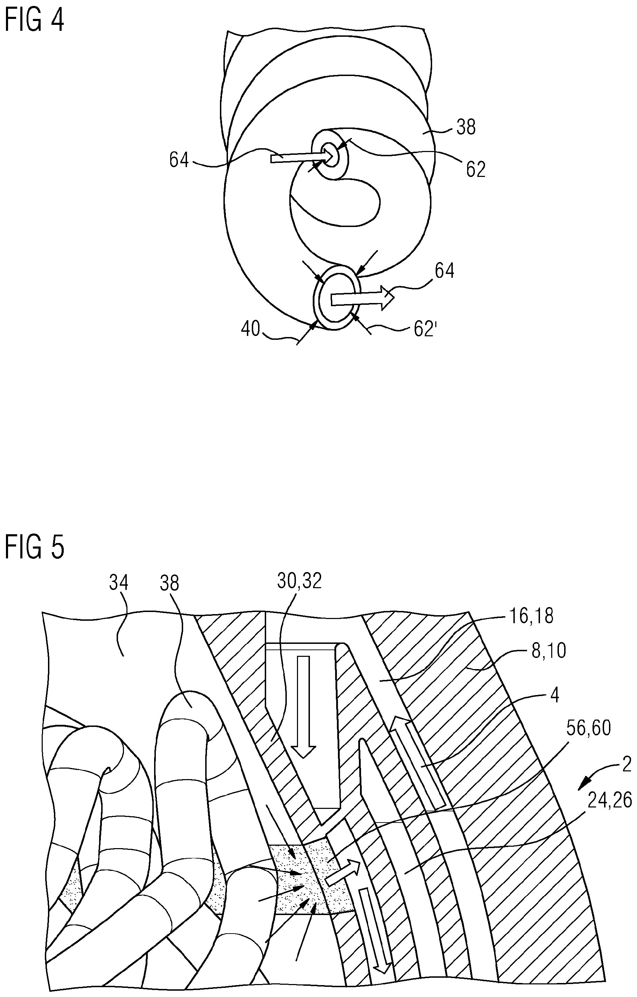

In Figur 4 ist ein vergrößerter Ausschnitt aus einer vorteilhaften Darstellung der Zufuhr-Rohrleitung 38 gegeben, wobei zu erkennen ist, dass ein Innendurchmesser 62 der Zufuhr-Rohrleitung 38 in Durchflussrichtung 64 sich vergrößert, was strömungsmechanische Vorteile bei der Fluidführung mit sich bringt. Im Weiteren ist es zweckmäßig, wenn zwischen Reaktionsraum 34 und den Fluidkanälen, sei es der erste Fluidkanal 18, der zweite Fluidkanal 26 oder der dritte Fluidkanal 54, je nachdem wie die konkrete Fluidführung ausgestaltet ist, in einem Fluiddurchlass 58 eine poröse Wand 60 eingebracht ist. Die poröse Wand 60 erlaubt einen Fluiddurchlass, verhindert jedoch das Eindringen von Katalysatormaterial in die entsprechenden Fluidkanäle 18, 26 oder 54.

Der beschriebene Reaktor weist somit während seines Betriebs den Vorteil auf, dass aufgrund der elektrischen zentralen Beheizung der Rohrleitungen, insbesondere der Zufuhr-Rohrleitung 38, die höchste Temperatur im Inneren des Reaktors 2 bei der Reaktion auftritt und eine Gegenflusskühlung durch Wärmetauschmaßnahmen in dem schalenförmigen Aufbau des äußeren Reaktors dazu führt, dass die Außenwand 10 während des Betriebes deutlich geringere Temperaturen, beispielsweise nur 250 °C bei einer Reaktionstemperatur von 800 °C aufweist. Dies führt dazu, dass die Außenwand 10 gegenüber herkömmlichen, von außen beheizten Reaktoren deutlich dünner ausgestaltet werden kann, was zum einen Material einspart und zum Zweiten eine deutliche bessere Prozessenergiebilanz bietet.

### Bezugszeichenliste

- 2: Reaktor
- 4: Edukt-Fluide
- 6: Produkt-Fluide
- 8: äußere Schale
- 10: Außenwand
- 12: Edukt-Zufuhröffnung
- 14: Produkt-Auslassöffnung
- 16: zweite Schale
- 18: erster Fluidkanal
- 20: dritte Schale
- 22: Trennwand
- 24: vierte Schale
- 26: zweiter Fluidkanal
- 28: fünfte Schale
- 30: zweite Trennwand
- 32: sechste Schale
- 34: Reaktionsraum
- 36: zentrales Rohr
- 38: Zufuhr-Rohrleitung
- 40: Flächenmaßzahl Querschnitt Zufuhr-Rohrleitung
- 42: Flächenmaßzahl Querschnitt zentrales Rohr
- 44: elektrische Zuleitung
- 46: Öffnung
- 48: elektrische Kontaktierung
- 50: zweite Öffnung
- 52: Reaktorhauptachse
- 54: dritter Fluidkanal
- 56: weitere Trennwand
- 58: Fluiddurchlass
- 60: poröse Wand
- 62: Innendurchmesser Zufuhr-Rohrleitung
- 64: Durchflussrichtung
- 66: zweite elektrische Kontaktierung
- 68: Verschraubung
- 70: Kühlkanäle
- 72: Katalysator
- 74: Abdichtung zweite Öffnung
- 76: Hilfs-Verschraubung
- 78: Austrittsöffnungen
- 80: Lamellen

## Patentansprüche

1. Reaktor zur Umsetzung von Edukt-Fluiden (4) zu Produkt-Fluiden (6) mit einem schalenförmigen Aufbau, wobei eine äußere Schale (8) eine Außenwand (10) darstellt, durch die eine Edukt-Zufuhröffnung (12) und eine Produkt-Auslassöffnung (14) geführt sind und an die im Inneren eine zweite Schale (16) in Form eines ersten Fluidkanals (18) angrenzt, worauf von außen nach innen gesehen eine dritte Schale (20) in Form einer Trennwand (22) vorgesehen ist, worauf eine vierte Schale (24) folgt, die wiederum in Form eines zweiten Fluidkanals (26) ausgestaltet ist und die im Weiteren von einer fünften Schale (28) in Form einer zweiten Trennwand (30) begrenzt ist, worauf als sechste Schale (32) ein Reaktionsraum (34) folgt, der von einem zentralen Rohr (36) durchzogen ist, das monolithisch mit den Schalen (8, 16, 20, 24) des Reaktors (2) verbunden ist und das zentrale Rohr (36) von mindestens einer Zufuhr-Rohrleitung (38) im Reaktionsraum (34) versehen ist, deren Länge die des zentralen Rohres (36) übertrifft und deren metallische Teil im Querschnitt eine Flächenmaßzahl (40) aufweist, die weniger als die Hälfte der Flächenmaßzahl (42) der zentralen Rohrleitung (36) beträgt, wobei die Zufuhr-Rohrleitung (38) sowohl mit dem ersten Fluidkanal (18) und dem zweiten Fluidkanal (26), als auch mit dem zentralen Rohr (36) in Form einer Fluidleitung monolithisch verbunden ist und wobei eine abgedichtete elektrische Zuleitung (44) durch eine Öffnung (46) des Reaktors (2) vorgesehen ist, durch die eine elektrische Kontaktierung (48) führt, die mit dem zentralen Rohr (36) für eine Widerstandsbeheizung verbunden ist.

2. Reaktor nach Anspruch 1, **dadurch gekennzeichnet, dass** der Reaktor durch ein additives Herstellungsverfahren hergestellt ist.

3. Reaktor nach Anspruch 2, **dadurch gekennzeichnet, dass** der Reaktor durch ein Laser-Schmelz-Verfahren hergestellt ist.

4. Reaktor nach einem der vorhergehenden Ansprüche, **dadurch gekennzeichnet, dass** die Zufuhr-Rohrleitung (38) spiralförmig um die zentrale Rohrleitung (36) verläuft.

5. Reaktor nach einem der vorhergehenden Ansprüche, **dadurch gekennzeichnet, dass** im Reaktor (2) eine Strömungsführung für Fluide in der Art erfolgt, dass die Edukt-Zufuhröffnung (12) in den ersten Fluidkanal (18) führt und von dort zunächst in die Zufuhr-Rohrleitung (38) führt, von dort weiter in das zentrale Rohr (36) verläuft, aus diesem in den Reaktionsraum (34) mündet und anschließend über den zweiten Fluidkanal (26) zur Produkt-Auslassöffnung (6) führt.

6. Reaktor nach einem der vorhergehenden Ansprüche, **dadurch gekennzeichnet, dass** eine zweite hermetisch verschließbare Öffnung (50) vorgesehen ist, die der elektrischen Zuleitungs-Öffnung (46) entlang einer Reaktor-Hauptachse (52) gegenüber liegt.

7. Reaktor nach Anspruch 5, **dadurch gekennzeichnet, dass** die zweite Öffnung (50) in direkter Verbindung mit dem Reaktionsraum (34) steht.

8. Reaktor nach einem der vorherigen Ansprüche, **dadurch gekennzeichnet, dass** zwei weitere Schalen in Form eines dritten Fluidkanals (54) und einer weiteren Trennwand (56) zwischen dem Reaktionsraum (34) und der fünften Schale (28) in Form der zweiten Trennwand (30) angeordnet sind.

9. Reaktor nach einem der vorhergehenden Ansprüche, **dadurch gekennzeichnet, dass** ein Fluiddurchlass (58) zwischen dem Reaktionsraum (34) und den jeweiligen Fluidkanälen (18, 26, 54) durch eine poröse Wand (60) gebildet ist.

10. Reaktor nach einem der Ansprüche 4 bis 9, **dadurch gekennzeichnet, dass** mindestens zwei spiralförmige Zufuhr-Rohrleitungen (38) das zentrale Rohr (36) umgeben.

11. Reaktor nach einem der vorhergehenden Ansprüche, **dadurch gekennzeichnet, dass** die Flächenmaßzahl (40) des metallischen Anteils des Querschnitts der Zufuhr-Rohrleitung (38) zwischen 50 % und 20 % der des zentralen Rohres (34) beträgt.

12. Reaktor nach einem der vorhergehenden Ansprüche, **dadurch gekennzeichnet, dass** der Innendurchmesser (62) der Zufuhr-Rohrleitung (38) sich entlang seiner Durchflussrichtung (64) erweitert.

13. Reaktor nach einem der vorhergehenden Ansprüche, **dadurch gekennzeichnet, dass** eine zweite elektrische Kontaktierung (66) zur Widerstandsbeheizung mit der äußeren Schale (8), der Reaktoraußenwand (10) verbunden ist.

14. Reaktor nach einem der vorhergehenden Ansprüche, **dadurch gekennzeichnet, dass** die elektrische Kontaktierung (48), die mit dem zentralen Rohr (38) für eine Widerstandsbeheizung mittels einer Verschraubung (68) verbunden ist.

15. Reaktor nach einem der vorhergehenden Ansprüche, **dadurch gekennzeichnet, dass** der Reaktor (2) Kühlkanäle (70) aufweist, die die Öffnung (46) für die elektrische Zuleitung (44) innerhalb der Reaktoraußenwand (10) umgeben.
